# EUROPÄISCHE PATENTANMELDUNG

(11) **EP 2 793 419 A1**
(43) Veröffentlichungstag der Anmeldung: **22.10.2014**
(21) Anmeldenummer: 13164192.0
(22) Anmeldetag: 17.04.2013
(51) Int. Cl.: H04L 5/00, E21B 47/12

(54) **Verfahren, Vorrichtung und System zur Datenübertragung**

(71) Anmelder: Fraunhofer-Gesellschaft zur Förderung der angewandten Forschung e.V., 80686 München (DE)
(72) Erfinder: Jungnickel, Volker, 10318 Berlin (DE); Gutierrez, Miguel, 10587 Berlin (DE); Krüger Udo, 12161 Berlin (DE)
(74) Vertreter: Zimmermann, Tankred Klaus

(57) **Zusammenfassung**

Bei einem Verfahren, einer Vorrichtung und einem System zur Datenübertragung werden eine Mehrzahl von Sendern (112) bereitgestellt, die gemäß einem Kommunikationsstandard für eine Datenübertragung mit einer Bandbreite arbeitet, die höher als die Übertragungsbandbreite (BW_{K}) ist. Der Sender (112) wird an die Übertragungsbandbreite (BW_{K}) angepasst, und eine Mehrzahl der angepassten Sender (112) werden unterschiedlichen Trägerfrequenzen in der Übertragungsbandbreite (BW_{K}) für eine parallele Datenübertragung zugeordnet.

## Beschreibung

Die vorliegende Erfindung bezieht sich auf das Gebiet der Nachrichtentechnik und hier insbesondere auf den Bereich der Datenübertragung mit einer vordefinierten Übertragungsbandbreite über einen vordefinierten Kanal, insbesondere bezieht sich die vorliegende Erfindung auf Ansätze zur Anpassung bekannter Übertragungsverfahren, die für entsprechende Bandbreiten ausgelegt sind, auf die vordefinierte Übertragungsbandbreite, ohne dass eine Änderung des eigentlichen Übertragungsverfahrens erfolgt.

Im Stand der Technik sind verschiedene Datenübertragungsansätze bekannt, die herkömmlicherweise entworfen sind, um eine Datenübertragung über einen Kanal in einen vorbestimmten Frequenzbereich (Bandbreite) zu ermöglichen. Im Stand der Technik existieren verschiedene Übertragungsverfahren, die im Zusammenhang mit leitungsgebundenen oder funkbasierten Kanälen zum Einsatz kommen. Beispielhaft sei auf den DAB-Standard (Digital Audio Broadcasting), den DVB-T-Standard, den WLAN-Standard oder die verschiedenen Mobilfunk-Standards (z.B. LTE) verwiesen. Leitungsgebundene Standards umfassen beispielsweise den ADSL-Standard oder den VDSL-Standard. Bei diesen bekannten Übertragungsansätzen sind jeweils Sender/Empfänger vorgesehen, die für einen Betrieb entsprechend den Vorgaben des Standards in einem bestimmten Frequenzbereich arbeiten und dafür ausgelegt sind.

Bekannte Übertragungsverfahren, die bei den oben genannten Ansätzen zum Einsatz kommen, umfassen z.B. den OFDM-Ansatz (Orthogonal Frequency-Division Multiplexing), bei dem mehrere orthogonale Träger zur digitalen Datenübertragung verwendet werden, wobei die zu übertragene Nutzinformation mit hoher Datenrate zunächst auf mehrere Teildatenströme aufgeteilt wird und diese Teildatenströme dann jeder für sich getrennt moduliert und übertragen wird. Sendevorrichtungen, die die oben erwähnten Standards implementieren und das OFDM-Verfahren einsetzen, sind an den speziellen Frequenzbereich, in dem diese eingesetzt werden sollen, sowie an die in den typischen Anwendungsszenarien vorgefundene Mehrwegeausbreitung angepasst. Für Anwendungen die unter Verwendung eines Kanals entsprechend einem der oben genannten Standards erfolgen soll, können die bekannten Sendevorrichtungen ohne Weiteres eingesetzt werden.

In Situationen, in denen die Kanaleigenschaften andere sind als die, die für die oben erwähnten Standards definiert sind, beispielsweise eine Datenübertragung von einem oder mehreren Sensoren an eine zentrale Erfassungsstelle, bei niedrigen Frequenzen, wobei die Übertragung für einen anderen Kanal optimiert ist, ist es im Stand der Technik bisher üblich, die auf den Kanal angepasste Sende/Empfangs-Vorrichtungen neu zu entwickeln und aufzubauen, was mit einem erheblichen Aufwand im Hinblick auf die Entwicklungskosten und die Entwicklungszeit einhergeht.

Ausgehend von diesem Stand der Technik liegt der vorliegenden Erfindung die Aufgabe zugrunde, einen verbesserten Ansatz zu schaffen, der eine Datenübertragung über einen Kanal unter Verwendung bekannter Sendevorrichtungen ermöglicht, wobei der Kanal sich von einem Kanal, der für die bekannte Sendevorrichtung spezifiziert ist, beispielsweise durch eine deutlich längere Impulsantwort bei gleichbleibender Übertragungsbandbreite, unterscheidet.

Diese Aufgabe wird durch ein Verfahren gemäß Anspruch 1, eine Vorrichtung gemäß Anspruch 12 und ein System gemäß Anspruch 13 gelöst.

Die vorliegende Erfindung schafft ein Verfahren zur Datenübertragung mit einer Übertragungsbandbreite, mit folgenden Schritten:
Bereitstellen einer Mehrzahl von Sendern, die gemäß einem Kommunikationsstandard für eine Datenübertragung mit einer Bandbreite arbeiten, die höher ist als die Übertragungsbandbreite;
Anpassen der Sender an die Übertragungsbandbreite; und
Zuordnen einer beliebigen Anzahl der angepassten Sender zu unterschiedlichen Trägerfrequenzen in der Übertragungsbandbreite für eine parallele Datenübertragung.

Gemäß bevorzugten Ausführungsbeispielen arbeiten die Sender, die gemäß dem Kommunikationsstandard für eine Datenübertragung arbeiten, mit einer Bandbreite, die zunächst höher ist als die Übertragungsbandbreite. Die Abtastrate aller Sender wird an die gewünschte Übertragungsbandbreite angepasst, wodurch die Länge des zyklischen Präfix an den gewünschten Kanal angepasst wird. Die Datensignale werden auf die angepassten Sender verteilt, welche bei unterschiedlichen Unterträgerfrequenzen innerhalb der gewünschten Übertragungsbandbreite eine parallele Datenübertragung realisieren.

Gemäß Ausführungsbeispielen umfasst das Anpassen der Sender ein Reduzieren der Bandbreite der Sender auf einen Bruchteil der gewünschten Übertragungsbandbreite.

Gemäß Ausführungsbeispielen umfasst das Anpassen der einzelnen Sender ein Reduzieren der Taktrate.

Gemäß Ausführungsbeispielen werden die Daten über einen Kanal mit veränderten Kanaleigenschaften in der gewünschten Übertragungsbandbreite übertragen, und die Zahl der parallel betriebenen Sender und ihre individuelle Bandbreite wird solange angepasst bis die Kanaleigenschaften eine zuverlässige Datenübertragung zulassen. In diesem Fall kann das Verfahren folgende Schritte umfassen:
Bestimmen der Kanaleigenschaft des Kanals, beispielsweise die Länge der Impulsantwort;
Auswählen der Zahl der Sender welche eine zuverlässige Datenübertragung zulässt; und
Zuordnen der Daten zu den parallel auf verschiedenen Unterträgern innerhalb der Übertragungsbandbreite betriebenen angepassten Sendern.

Gemäß Ausführungsbeispielen umfasst die Datenübertragung eine OFDM-Datenübertragung.

Gemäß Ausführungsbeispielen umfasst die Datenübertragung eine Datenübertragung über einen akustischen Kanal. Der akustische Kanal kann ein Bohrgestänge umfassen, an dessen Ende ein Bohrkopf und benachbart zu dem Bohrkopf ein Sensor sowie eine Sendeeinrichtung angeordnet sind, wobei die Datenübertragung eine Datenübertragung von Sensordaten nach Übertage umfasst.

Gemäß Ausführungsbeispielen umfasst die Datenübertragung eine Datenübertragung über eine Funkverbindung (Funklink) eines Funksystems bei einer Frequenz, die niedriger ist als eine Betriebsfrequenz des nicht angepassten Senders. Das Funksystem kann einen oder mehrere Sensoren und/oder Aktoren mit jeweils zugeordneter Sender- und/oder Empfängervorrichtung mit einer zentralen Erfassungsstelle verbinden.

Die vorliegende Erfindung schafft ein Computer-Programm-Produkt mit Anweisungen, die auf einem computerlesbaren Medium gespeichert sind, zum Ausführen des erfindungsgemäßen Verfahrens, wenn die Anweisungen durch einen Computer ausgeführt werden.

Die vorliegende Erfindung schafft eine Vorrichtung zur Datenübertragung mit einer Übertragungsbandbreite, mit:
einer Mehrzahl von Sendern, die gemäß einem Kommunikationsstandard für eine Datenübertragung mit einer Bandbreite arbeiten, die höher ist als die Übertragungsbandbreite, und die an die gewünschte Übertragungsbandbreite angepasst sind, und
einer Steuerung, die wirksam ist, um der Übertragungsbandbreite eine Mehrzahl der angepassten Sender bei unterschiedlichen Trägerfrequenzen in der Übertragungsbandbreite für eine parallele Datenübertragung zuzuordnen.

Die vorliegende Erfindung schafft ein System zur Datenübertragung, mit
einem Übertragungskanal;
einer erfindungsgemäßen Vorrichtung für eine Datenübertragung auf dem Übertragungskanal; und
einem Empfänger zum Empfangen der über den Übertragungskanal übertragenen Daten.

Die vorliegende Erfindung schafft einen Ansatz, der eine Datenübertragung unter Verwendung bekannter Sender, die gemäß einem Kommunikationsstandard arbeiten, ermöglicht, indem die grundsätzliche Struktur des bekannten Senders beibehalten wird, insbesondere das durch den Sender verwendete Übertragungsverfahren, und lediglich eine Skalierung des Senders bewirkt wird, so dass eine Bandbreite, mit der der Sender arbeitet, auf eine Kanalbandbreite des zur Verfügung stehenden Kanals angepasst wird. Zur Vermeidung von Übertragungsproblemen aufgrund der besonderen Eigenschaften des verwendeten Kanals wird erfindungsgemäß ferner vorgeschlagen, in der Bandbreite des Kanals mehrere der angepassten Sender (bei unterschiedlichen Trägerfrequenzen) anzuordnen, um eine parallele Datenübertragung über die Mehrzahl von Sendern zu ermöglichen, wodurch negative Einflüsse des Kanals auf das Übertragungsverfahren vermieden werden.

Gemäß bevorzugten Ausführungsbeispielen der Erfindung setzt das im Sender eingesetzte Übertragungsverfahren ein OFDM-Verfahren zur Übertragung der Daten ein, wobei vorzugsweise ein Sender verwendet wird, der entsprechend dem LTE-Mobilfunkstandard arbeitet und zumindest den LTE PHY Layer und den LTE Link Layer implementiert (im Folgenden auch als LTE-Sender bezeichnet), der jedoch im Hinblick auf die geringere Bandbreite des zur Verfügung stehenden Kanals skaliert wurde. Gemäß Ausführungsbeispielen kann die Taktrate des LTE-Senders um einen vorbestimmten Faktor verringert werden, wodurch sich die reduzierte Bandbreite, die mit der erwünschten Kanalbandbreite übereinstimmt, einstellt. Bei der Zuordnung der so angepassten Sender innerhalb der Bandbreite des Kanals wird eine entsprechende Verschiebung der Trägerfrequenz des LTE-Senders zu einer Frequenz innerhalb der Kanalbandbreite bewirkt.

Der erfindungsgemäße Ansatz ist insbesondere bei Anwendungen vorteilhaft, bei denen der zur Verfügung stehende Kanal eine Datenübertragung mit hoher Bandbreite erschwert. Durch den erfindungsgemäßen Einsatz des OFDM-Verfahrens, wie es gemäß Ausführungsbeispielen vorgeschlagen wird, in Verbindung mit der Bereitstellung mehrerer angepasster Sender, die entsprechend dem Übertragungsverfahren arbeiten, wird in dem Kanalband eine Datenübertragung mit einer erhöhten Datenrate ermöglicht, ohne dass es notwendig wäre, neue Sender zu entwickeln und aufzubauen, die auf den speziellen Kanal angepasst sind, vielmehr wird ein bekannter Sender skaliert, um auf die geringere Bandbreite angepasst zu sein und anschließend werden mehrere Sender auf die Kanalbandbreite verteilt.

Gemäß einem bevorzugten Ausführungsbeispiel der Erfindung wird dieser Ansatz bei Sensor-Netzwerken eingesetzt, die über ein Funksystem verbunden sind, welches bei einer Trägerfrequenz arbeitet, die beispielsweise deutlich unterhalb der Frequenz liegt, bei der ein LTE-Sender normalerweise arbeitet, beispielsweise im Bereich unterhalb 700 MHz, wo frühere Rundfunk- und Fernsehfrequenzen in Zukunft genutzt werden, um Mobilfunknetze zu betreiben. Gemäß der vorliegenden Erfindung wird beispielsweise der ursprüngliche LTE-Sender skaliert, um im neuen Frequenzbereich zu arbeiten, ohne dass dabei die Übertragungstechnik verändert wird, was im Zusammenhang mit dem OFDM-Verfahren lediglich bedeutet, dass alle Zeiten um den Skalierungsfaktor länger werden, die grundsätzliche LTE-Rahmenstruktur dabei jedoch erhalten bleibt. Somit wird unter Verwendung des gut eingeführten und gut funktionierenden LTE-OFDM-Übertragungsansatzes, der auf die niedrigere Frequenz skaliert wurde, eine störungssichere und zuverlässige Datenübertragung ermöglicht, selbst bei Kanälen, bei denen eine Datenübertragung aufgrund sich ändernder Kanaleigenschaften schwierig wäre.

Ein weiteres, bevorzugtes Einsatzgebiet des erfindungsgemäßen Ansatzes ist im Bereich der Bohrtechnik angesiedelt, genauer gesagt im Bereich der akustischen Übertragung seismischer Daten von einem Bohrkopf nach Übertage, zur Steuerung beispielsweise des Bohrpfades. Gemäß diesem Ausführungsbeispiel wird der Kanal durch das Bohrgestänge gebildet, an dessen fernem Ende ein Bohrkopf angeordnet ist, dem ein oder mehrere Sensoren zugeordnet sind, um seismische Daten zu erfassen. Ferner ist ein Sender gemäß dem erfindungsgemäßen Ansatz vorgesehen, der über den durch das Bohrgestände gebildeten Kanal eine Datenübertragung auf die oben beschriebene Art und Weise ermöglicht, zu einem Empfänger, der Übertage angeordnet ist. Ausführungsbeispiele der Erfindung ermöglichen beispielsweise eine Datenübertragung mit einer Datenrate von einigen 100 Bit/s vom Bohrkopf bis zur Oberfläche, beispielsweise über eine Tiefe von 2000 m.

Ausführungsbeispiele der vorliegende Erfindung werden nachfolgend unter Bezugnahme auf die beiliegenden Zeichnungen näher erläutert. Es zeigen:
- Fig. 1: eine schematische Darstellung eines Systems zur Datenübertragung gemäß den Lehren der vorliegenden Erfindung;
- Fig. 2: den LTE-Carrier-Aggregation-Ansatz, wobei Fig. 2(a) die erfindungsgemäße Carrier-Aggregation innerhalb einer konstanten Bandbreite zeigt, und wobei Fig. 2(b) den bekannten LTE-Carrier-Aggregation-Ansatz zeigt;
- Fig. 3: eine schematische Darstellung eines Sensor-Netzwerkes, bei dem eine Datenübertragung entsprechend den Lehren der vorliegende Erfindung durchgeführt wird;
- Fig. 4: eine vereinfachte Darstellung eines Bohrlochkommunikationssystems;
- Fig. 5: eine schematische Darstellung des anhand der Fig. 4 gezeigten Kommunikationssystems einschließlich der OFDM-Verarbeitung für eine Übertragungsrichtung;
- Fig. 6: den Frequenzgang des Kanals aus Fig. 4 für verschiedene Wellentypen und für verschiedene Tiefen, wobei Fig. 6(a) den Frequenzgang des Kanals für eine longitudinale akustische Welle für unterschiedliche Längen des Bohrstrangs zeigt, und wobei Fig. 6(b) den Frequenzgang des Kanals für eine transversale akustische Welle für verschiedene Längen des Bohrstrangs zeigt;
- Fig. 7: ein Beispiel für die spektrale Verteilung der SNR-Schätzung für den Standard-LTE (94 Bit/s);
- Fig. 8: die spektrale Verteilung der SNR-Schätzung für LTE mit Carrier-Aggregation 2 (2.143 Bits/s) mit dem gleichen Kanal wie für Fig. 7; und
- Fig. 9: simulierte Datenraten mit den jeweils gemessenen Kanalcharakteristika in Abhängigkeit von der Gesamtlänge des Bohrstrangs für verschiedene Grade der Carrier Aggregation.

In der nachfolgenden Beschreibung der bevorzugten Ausführungsbeispiele werden gleiche oder gleichwirkende Elemente mit den gleichen Bezugszeichen versehen.

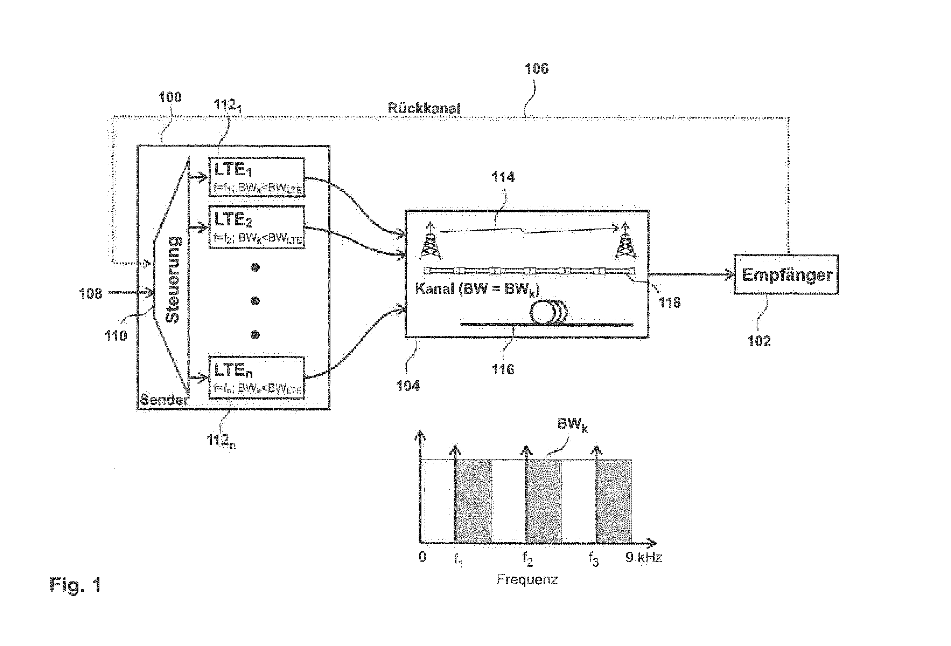

Fig. 1 zeigt eine schematische Darstellung eines Systems zur Datenübertragung gemäß den Lehren der vorliegenden Erfindung. Das in Fig. 1 gezeigte System umfasst einen Sender 100, der entsprechend dem erfindungsgemäßen Verfahren arbeitet bzw. entsprechend der erfindungsgemäßen Vorrichtung ausgebildet ist. Das System umfasst ferner einen Empfänger 102 sowie einen Kanal 104, über den Signale, beispielsweise Datensignale 108, von dem Sender 100 an den Empfänger 102 übertragen werden. Gemäß Ausführungsbeispielen kann ein Rückkanal 106 getrennt von dem Kanal 104 vorgesehen sein, um eine Abschätzung der Kanaleigenschaften aufgrund der am Empfänger 102 empfangenen Signale an den Sender 100 für eine Steuerung der Übertragung zurückzugeben. Bei anderen Ausführungsbeispielen kann anstelle des separaten Rückkanals auch der Kanal 104 als Rückkanal benutzt werden.

Der Sender 100 empfängt die zu übertragenden Daten, wie dies schematisch durch den Pfeil 108 angedeutet ist, beispielsweise von einem Sensor. Der Sender 100 umfasst eine Steuerung 110 und eine Mehrzahl von Sendeeinheiten 112ₗ bis 112ₙ. Bei dem in Fig. 1 gezeigten Ausführungsbeispiel umfassen die Sendeeinheiten 112ₗ bis 112ₙ Sender, die entsprechend dem LTE-Kommunikationsstandard arbeiten, z.B. Sender, die zumindest den LTE PHY Layer und den LTE Link Layer implementieren (im Folgenden auch als LTE-Sender bezeichnet). Entsprechend dem LTE-Kommunikationsstandard erfolgt mittels des LTE-Senders eine Datenübertragung entsprechend dem OFDM-Verfahren, wobei der LTE-Sender für einen Frequenzbereich, wie er durch den LTE-Kommunikationsstandard definiert ist, ausgelegt ist. Der den Sender 100 und den Empfänger 102 verbindende Kanal 104 kann verschiedene Ausgestaltungen haben, beispielsweise kann der Kanal 104 einen Funkkanal 114, einen leitungsgebundenen Kanal 116 oder einen akustischen Kanal 118 umfassen. Der Kanal 104 stellt z.B. eine Bandbreite BW_{K} von etwa im 10 kHz für die Datenübertragung im Bereich der Tiefbohrtechnik bereit, wobei der Kanal in diesem Fall ein akustischer Kanal 118 ist, der durch ein Bohrgestänge bereitgestellt wird. In Fig. 1 ist unterhalb des Kanals 104 der durch den Kanal bereitgestellte Frequenzbereich von 0 bis 9 kHz gemäß einem Ausführungsbeispiel dargestellt.

Erfindungsgemäß werden die LTE-Sender so angepasst, dass deren Bandbreite der Kanalbandbreite BWₖ des Kanals 104 entspricht. Gemäß Ausführungsbeispielen erfolgt dies durch eine Reduzierung der Taktrate und eine Verschiebung der Trägerfrequenz, wodurch ein OFDM-Signal mit einer Bandbreite von beispielsweise 10 kHz erzeugt werden kann. Gemäß der vorliegenden Erfindung werden in der durch den Kanal bereitgestellten Bandbreite BW_{K} mehrere der angepassten LTE-Sender 112ₗ bis 112ₙ für eine parallele Datenübertragung bereitgestellt. Bei dem in Fig. 1 dargestellten Ausführungsbeispiel wird für die in Fig. 1 gezeigten Frequenzen f₁ und f₂ innerhalb des Frequenzbandes von 0 bis 9 kHz jeweils eine angepasste LTE-Sendeeinheit bereitgestellt, die die empfangenen Daten 108 entsprechend dem LTE-Übertragungsverfahren über den Kanal 104 in Richtung des Empfängers 102 übertragen. An dieser Stelle sei darauf hingewiesen, dass die angepassten LTE-Sendeeinheiten, wie erwähnt, auf die Kanalbandbreite BW_{K}, im gezeigten Fall auf 9 kHz, angepasst sind, die zwei, für die parallele Datenübertragung verwendeten LTE-Einheiten mit der Bandbreite BW_{K} jedoch bei den unterschiedlichen Trägerfrequenzen f₂ und f₃ arbeiten. Die Datensignale werden dann auf die angepassten Sender verteilt, welche bei den unterschiedlichen Unterträgerfrequenzen f₂ und f₃ innerhalb der Übertragungsbandbreite eine parallele Datenübertragung realisieren. Bei anderen Ausführungsbeispielen können die LTE-Sender auf einen Teilbereich der Übertragungsbandbreite (BW_{K}) angepasst werden. Gemäß Ausführungsbeispielen arbeiten die Sender, die gemäß dem Kommunikationsstandard für eine Datenübertragung arbeiten, mit einer Bandbreite, die zunächst höher ist als die Übertragungsbandbreite. Die Anpassung der Sender erfolgt durch ein Anpassung der Abtastrate aller Sender an die gewünschte Übertragungsbandbreite, wodurch die Länge des zyklischen Präfix an den gewünschten Kanal angepasst wird.

Über den Rückkanal 106 kann beispielsweise durch Auswertung der am Empfänger 102 ankommenden Signale bestimmt werden, in welchen Frequenzbereichen der Kanal 104 Kanaleigenschaften aufweist, die eine zuverlässige Datenübertragung ermöglichen. Diese Information kann an die Steuerung 110 des Senders 100 zurückgegeben werden, die dann in der Lage ist, basierend auf den erhaltenen Informationen über die Kanaleigenschaften in verschiedenen Frequenzbereichen eine Auswahl zu treffen, nämlich eine Auswahl dahin gehend, auf welche Unterträgerfrequenzen innerhalb der gewünschten Übertragungsbandbreite die Datensignale für eine parallele Datenübertragung zu verteilen sind.

Ferner kann bei Ausführungsbeispielen, basierend auf den erfassten Kanaleigenschaften des zur Datenübertragung vorgesehenen Kanals die Zahl der parallel betriebenen Sender und ihre individuelle Bandbreite solange angepasst werden, bis die Kanaleigenschaften eine zuverlässige Datenübertragung zulassen. In diesem Fall kann zunächst die Kanaleigenschaft des Kanals bestimmt werden, z.B. die Länge der Impulsantwort. Anschließend wird die Anzahl der Sender ausgewählt, welche eine zuverlässige Datenübertragung zulässt. Die Daten werden dann den parallel auf verschiedenen Unterträgern innerhalb der Übertragungsbandbreite betriebenen angepassten Sendern für die parallele Datenübertragung zugewiesen bzw. zugeordnet.

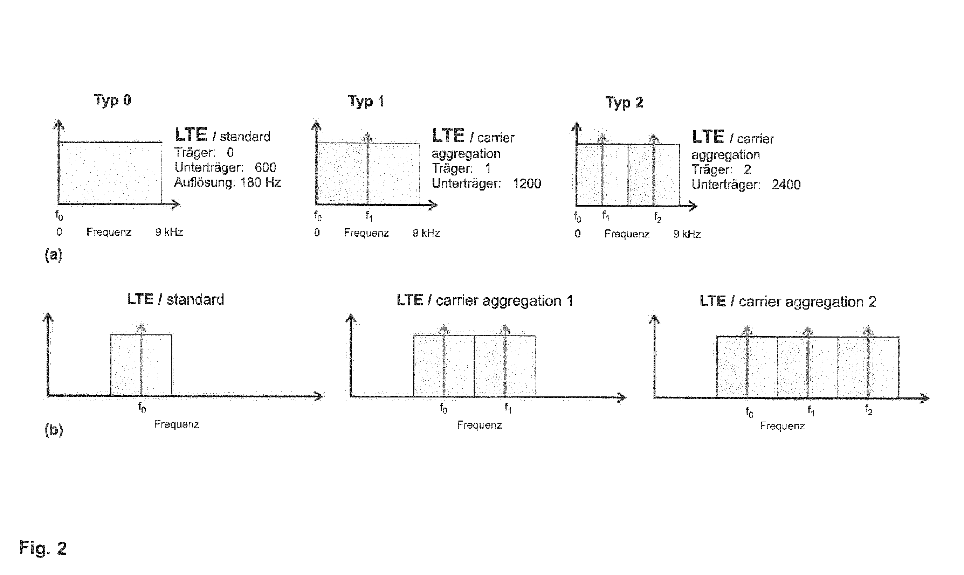

Der erfindungsgemäße Ansatz, wie er oben anhand der Fig. 1 schematisch beschrieben wurde, ist vorteilhaft bei Kanälen 104, bei denen aufgrund der Kanaleigenschaften die spektrale Auflösung und die Länge eines Schutzintervalls, wie es entsprechend dem OFDM-Verfahren vorgesehen ist, nicht ausreichend ist, um im Übertragungsspektrum des Kanals noch ausreichend Bandbreite für die Datenübertragung zuzuordnen. Erfindungsgemäß wird daher auf einen Ansatz zurückgegriffen, der dem LTE-Carrier-Aggregation-Ansatz nachgebildet ist. Dies sei nachfolgend anhand der Figur 2 näher erläutert. Fig. 2(a) erläutert die erfindungsgemäße Carrier-Aggregation innerhalb einer konstanten Bandbreite, und Fig. 2(b) erläutert den bekannten LTE-Carrier-Aggregation-Ansatz. In Fig. 2(b) zeigt die erste Abbildung eine Funktionalität entsprechend dem LTE-Standard ohne Carrier-Aggregation. Die Datenübertragung erfolgt innerhalb der um den Träger f₀ befindlichen Bandbreite. Werden nun zusätzliche Bandbreiten innerhalb des Spektrums frei, so kann gemäß dem LTE-Carrier-Aggregation-Ansatz die Datenrate über eine Erhöhung der Bandbreite erhöht werden, indem ein oder mehrere, zusätzliche LTE-Sendesysteme, die bei den Frequenzen arbeiten, die den freigewordenen Frequenzbändern zugeordnet sind, hinzugefügt werden, so dass im Fall der LTE-Carrier-Aggregation 1, die in Fig. 2(b) gzeigt ist, eine parallele Datenübertragung über zwei Träger f₀ und f₁ erfolgen kann, und bei einer LTE-Carrier-Aggregation 2 eine parallele Datenübertragung über drei Träger f₀, f₁ und f₂.

Erfindungsgemäß wird der bekannte Carrier-Aggregation-Ansatz verwendet, jedoch erfolgt, anders als beim LTE-Standard, keine Erhöhung der Datenrate durch Erhöhen der Bandbreite, sondern der Carrier-Aggregation-Ansatz wird erfindungsgemäß innerhalb einer konstanten Bandbreite, nämlich der konstanten, durch den Kanal bereitgestellten Bandbreite BW_{K} eingeführt, so dass anstelle oder zusätzlich zu dem Basisband-LTE-Signal mehrere geträgerte LTE-Signale in der gleichen Bandbreite angeordnet sind. Fig. 2(a) zeigt ganz links einen Ansatz, bei dem eine angepasste LTE-Einheit ohne Carrier-Aggregation für eine Übertragung über den Kanal 104 mit der Bandbreite BW_{K} gleich 9 kHz vorgesehen ist. Erfindungsgemäß wird, wie oben erläutert, zusätzlich oder anstelle des Basisbandsignals bei f₀ ein oder mehrere zusätzliche LTE-Signale mit der Trägerfrequenz f₁ bzw. f₂ innerhalb des 9 kHz-Bandes für eine parallele Datenübertragung bereitgestellt. Wie aus Fig. 2(a) zu entnehmen ist, führt dies gegenüber dem Standardansatz bei der Verwendung eines zusätzlichen Trägers zu einer Erhöhung der verwendeten Unterträger, einer Verbesserung der Frequenzauflösung und ermöglicht die Verwendung eines größeren Schutzintervalls. Bei der Verwendung von zwei zusätzlichen Trägern erhöht sich entsprechend die Anzahl der verwendeten Unterträger und auch die Auflösung im Frequenzbereich. Ferner sind noch längere Schutzintervalle möglich.

Nachfolgend werden Ausführungsbeispiele näher erläutert, bei denen die oben anhand der Fig. 1 und der Fig. 2 beschriebene, erfindungsgemäße Vorgehensweise zur Datenübertragung eingesetzt wird.

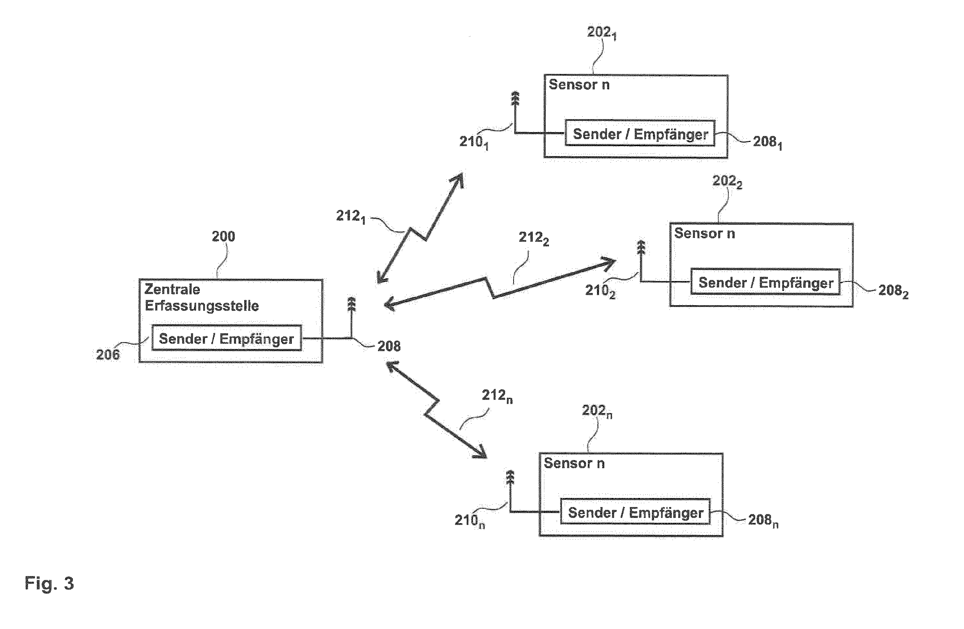

Fig. 3 zeigt eine schematische Darstellung eines Sensor-Netzwerkes, bei dem eine Datenübertragung entsprechend den Lehren der vorliegende Erfindung durchgeführt wird. In Fig. 3 ist eine zentrale Erfassungsstelle 200 gezeigt, welche dazu dient, Sensorsignale von einer Mehrzahl von Sensoren 202ₗ bis 202ₙ zu empfangen. Die zentrale Erfassungsstelle 200 kann beispielsweise eine zentrale Steuereinheit sein, die an unterschiedlichen Stellen einer Umgebung, beispielsweise eines Hauses, Umgebungsparameter über die Sensoren 202ₗ bis 202ₙ erfasst, um ansprechend auf die erfassten Sensorsignale gegebenenfalls eine Regelung oder Steuerung von Aktoren oder die Ausgabe von Informationssignalen zu bewirken. Die zentrale Erfassungsstelle 200 umfasst einen Sender/Empfänger 206, der mit einer Antenne 208 verbunden ist und entsprechend den Lehren der vorliegenden Erfindung, wie sie oben erläutert wurden, arbeitet. Jeder der Sensoren 202ₗ bis 202ₙ umfasst ebenfalls eine Sender/Empfänger-Anordnung 208ₗ bis 208ₙ, die ihrerseits mit entsprechenden Antennen 210ₗ bis 210ₙ verbunden sind. Bei dem in Fig. 3 dargestellten Beispiel ist der Kanal durch einen Funkkanal gebildet, wie durch die Pfeile 212ₗ bis 212ₙ schematisch dargestellt ist. Alternativ können auch andere, beispielsweise leitungsgebundene Verbindungen zwischen den Sensoren und der Erfassungsstelle 200 vorgesehen sein. Auch akustische Verbindungen sind denkbar, beispielsweise über ein Wasserleitungssystem innerhalb eines Gebäudes, entlang welchem an verschiedenen Positionen die Sensoren angeordnet sind, die beispielsweise Informationen über den Druck, die Temperatur oder die Durchflussmenge an der bestimmten Position an die Stelle 200 zurückmelden. Die Sender/Empfänger der Sensoren und der Erfassungsstelle 200 kommunizieren unter Verwendung des oben beschriebenen Ansatzes und ermöglichen trotz der geringen Bandbreite des zur Verfügung stehenden Kanals daher unter Ausnutzung der bekannten LTE-Sendeeinheiten eine Datenübertragung mit einer hohen Datenrate.

An dieser Stelle sei darauf hingewiesen, dass die Fig. 3 ein Sensornetzwerk zeigt, die vorliegende Erfindung ist jedoch nicht hierauf beschränkt. Beispielsweise können zusätzlich noch Aktoren vorgesehen sein, die mit der Erfassungsstelle 200 auf die erfindungsgemäße Art und Weise kommunizieren, um entsprechend den erfassten Sensorsignalen angesteuert zu werden. Auch reine Aktor-Netzwerke sind möglich, in diesem Fall wären die Sensoren gemäß Fig. 3 durch entsprechende Aktoren zu ersetzen. Ferner ist auch eine Übertragung auf die erfindungsgemäße Art und Weise zwischen einzelnen Sensoren bzw. Aktoren möglich.

Nachfolgend wird ein weiteres bevorzugtes Ausführungsbeispiel der vorliegenden Erfindung näher erläutert, gemäß dem der erfindungsgemäße Ansatz auf akustische Wellen zur Verbesserung der Kommunikation in der Tiefbohrtechnik eingesetzt wird. Der untertägige Einsatz hochauflösender seismischer Verfahren zur zielgenauen Steuerung der Bohrrichtung erfolgt durch eine Datenübertragung mit hohen Datenraten nach Übertage. Im Stand der Technik sind im Zusammenhang mit der Tiefbohrtechnik Ansätze bekannt, um eine Datenübertragung aus der Tiefe nach über Tage zu ermöglichen. Diesbezüglich sei auf den Mud-Pulse-Ansatz verwiesen, der den Nachteil hat, dass nur wenige Bits pro Sekunde übertragen werden können. Zur Erhöhung der Datenübertragungsraten wurde bereits eine akustische Datenübertragung entlang des Bohrgestänges vorgeschlagen und für relativ schmalbandige, modulierte Pulse mit einer Bandbreite von weniger als 10 Hz sind Datenraten von 33 Bit/s möglich, wie dies beispielsweise von M.E. Reeves, P.L. Camwell, J. McRory, "High Speed Acoustic Telemetry Network Enables Real Time Along String Measurements, Greatly Reducing Drilling Risk", Offshore Europe, UK, (2011) beschrieben wird. Für die Übertragung großer Datenmengen, wie sie z.B. bei der seismischen Vorauserkundung anfallen, ist diese Datenrate jedoch nicht ausreichend. Eine Steigerung der Datenrate ist nur mit wesentlich breitbandigeren Signalen erreichbar, wobei das Problem hier jedoch das stark frequenzselektive Verhalten des Bohrstranges ist. Die vielen Gestängeverbinder sorgen für einen zerklüfteten Übertragungsfrequenzgang mit vielen Pass- und Stoppbändern, was bedeutet, dass auf einigen Frequenzen überhaupt keine Daten übertragen werden können, während die Übertragung auf anderen Frequenzen gut funktioniert.

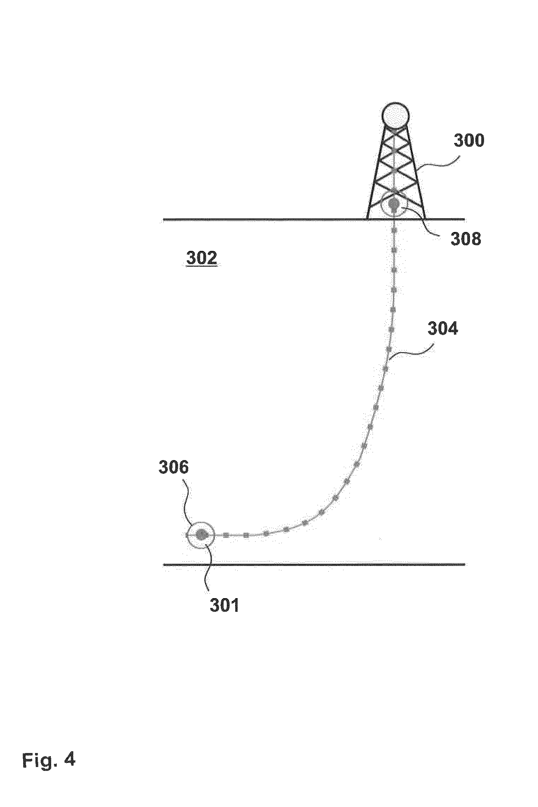

Fig. 4 zeigt eine vereinfachte Darstellung eines Bohrlochkommunikationssystems. Ein Bohrturm 300 ist vorgesehen, um eine Bohrung in einem Untergrund 302 durchzuführen. Mittels eines Bohrkopfes 301 wird ein Bohrloch in den Untergrund 302 vorgetrieben, wobei der Bohrkopf am vorderen Ende eines Bohrstrangs 304, der ein Bohrgestänge mit einer Vielzahl von miteinander verbundenen Bohrstangen umfasst. Am Bohrkopf ist ein Sender 306 angeordnet, der entsprechend dem erfindungsgemäßen Ansatz arbeitet und eine Datenübertragung an einen Empfänger 308, der Übertage angeordnet ist, ermöglicht. Durch den Einsatz des OFDM-Standards wird erfindungsgemäß ermöglicht, dass das Signal aus vielen Unterträgern ("Tönen") zusammengesetzt ist, welche unabhängig von anderen Tönen durch das Gestänge 304 von dem Sender 306 zu dem Empfänger 308 laufen. Damit kann die Übertragung in dem vielfach verschraubten Bohrstrang 304 robust gegenüber der massiven akustischen Mehrwegeausbreitung gemacht werden, und je besser ein bestimmter Übertragungskanal gerade funktioniert, desto mehr Daten können transportiert werden, wie dies im Zusammenhang mit kurzen Bohrsträngen bereits von M. Memarzadeh, "Optimal Borehole Communication Using Multicarrier Modulation", Ph.D. thesis, Rice University, Houston, Texas, (2007)beschrieben wird.

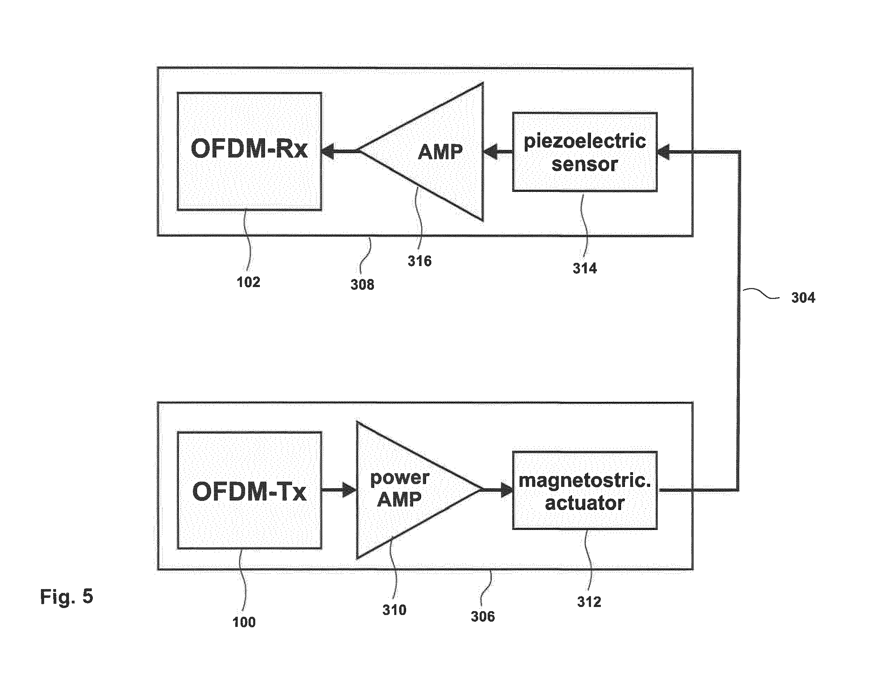

Die Fig. 5 zeigt eine schematische Darstellung des anhand der Fig. 4 gezeigten Kommunikationssystems einschließlich der OFDM-Verarbeitung für eine Übertragungsrichtung. Der Sender 306 umfasst den erfindungsgemäßen Sender 100 sowie einen Leistungsverstärker 310, um die vom Sender 100 ausgegebenen Signale für eine Ansteuerung eines magnetostriktiven Aktuators 312 zu verstärken. Der Empfänger 308 umfasst einen piezoelektrischen Sensor 314 und die durch diesen erfassten Signale werden durch den Verstärker 316 verstärkt und an die Empfängerschaltung 102 bereitgestellt. Der in Fig. 1 gezeigte Kanal 104 ist durch das Bohrgestänge 304 realisiert.

Bei dem vorliegenden Ausführungsbeispiel werden die Daten mittels akustischer Wellen übertragen, und die Wellen werden mittels eines des magnetostriktiven Aktuators 312, der an einem Ende des Bohrstrangs 304 angeordnet ist, angeregt und an dem anderen Ende des Bohrstrangs 304 mittels eines Piezosensors 314 empfangen. Neben der Dämpfung weist der Frequenzgang des akustischen Übertragungskanals 304 viele Durchlass- und Sperrbereiche auf, so dass gemäß Ausführungsbeispielen eine adaptive OFDM-Technik eingesetzt wird, ähnlich wie im LTE-Mobilfunksystem. Der Empfänger 102 vermisst den Frequenzgang des Kanals 104 und informiert den Sender 100, beispielsweise über den in Fig. 1 gezeigten Rückkanal 106. Der Sender kann dann die Daten nur in den Durchlassbereichen senden, was auch als "closed-loop"-Übertragung bezeichnet wird. Ferner kann das Modulationsformat und damit die Zahl der Bits pro Unterträger sowie die Sendeleistung an die Qualität des Übertragungskanals angepasst werden. Ein stark verrauschter Kanal ermöglicht beispielsweise nur eine BPSK-Modulation (1 Bit/Unterträger), wenn ein guter Kanal auch eine 64-QAM-Modulation ermöglicht (6 Bit/Unterträger). Ferner können auch die bekannten Fehlerkorrekturansätze verwendet werden, indem den Daten beispielsweise redundante Bits hinzugefügt werden, die es im Zusammenwirken mit einem Interleaver ermöglichen, Daten auch bei zusammenhängenden Bündelfehlern im Kanal mit maximaler Datenrate sicher zu übertragen.

Gemäß Ausführungsbeispielen der vorliegende Erfindung, die im Zusammenhang mit der Tiefenbohrtechnik eingesetzt werden, werden Aktoren verwendet, welche auf Terphenol-D basieren, einem ferromagnetischen Material mit einer der größten magnetostriktiven Effekte, was einhergeht mit einer starken Hysterese, die auch einen nicht-linearen Zusammenhang zwischen elektrischem Strom und akustischer Erregung verursacht. Für ein OFDM-Signal mit vielen Unterträgern erzeugt die Krümmung der Kennlinie ein Übersprechen der Unterträger ineinander, das sich als zusätzliches Eigenrauschen auswirkt und die Kapazität des Übertragungssystems begrenzt. Der piezoelektrische Sensor 308, der als Empfänger wirksam ist, ist ein weniger kritisches Bauteil, so dass eine mechanische Resonanzfrequenz ohne Weiteres oberhalb von 10 kHz gelegt werden kann, so dass er im interessierenden Frequenzbereich bezüglich der Beschleunigung eine konstante Frequenzcharakteristik aufweist. Vorzugsweise ist der Empfänger nahe am Ende des Bohrgestänges platziert.

Gemäß bevorzugten Ausführungsbeispielen umfassen die oben erwähnten Sendeeinheiten (siehe die Sendeeinheiten 112 in Fig. 1) LTE-Sendeeinheiten, die entsprechend dem LTE-Standard arbeiten, die jedoch ausgehend von einer Systembandbreite von beispielsweise 20 MHz für die Anwendung im Bereich der Tiefenbohrtechnik angepasst wurden. Die LTE-Sendeeinheiten werden aufgrund ihrer leistungsfähigen und komplexen Signalverarbeitung bevorzugt. Für den Einsatz bei dem oben beschriebenen Ausführungsbeispiel im Zusammenhang mit der Tiefenbohrtechnik wird gemäß einem Ausführungsbeispiel die LTE-Sendeeinheit modifiziert, so dass diese eine 1000-fach geringere Taktrate aufweist, der Träger wird zu 0 Hz verschoben und eine komplex konjugierte Spiegelfunktion wird eingesetzt, so dass ein reell-wertiges OFDM-Basisbandsignal mit einer Bandbreite von 10 kHz erzeugt werden kann. Durch das Benutzen des LTE-Standards bleibt die LTE-Rahmenstruktur erhalten, und die Zeiten sind um einen Faktor 1000 länger, d.h., ein kompletter akustischer Übertragungsrahmen dauert anstelle der 10 Millisekunden bei LTE nunmehr 10 Sekunden und er ist, wie bei LTE in 10 Unterrahmen ä 1 Sekunde aufgeteilt, anstelle von einer Millisekunde, die auch die kleinste Übertragungseinheit, das sogenannte Transmission Time Intervall (TTI) definieren. In jedem TTI sind in Zeitrichtung 12 Symbole angeordnet, und jedes Symbol besteht aus 600 OFDM-Unterträgern. Insgesamt können so pro Unterrahmen 7.200 Unterträger mit Daten beladen werden, wobei gemäß Ausführungsbeispielen im Mittel ca. 5,5% für sogenannte Piloten reserviert werden, die im Empfänger bekannt sind und zum einen die Synchronisation auf die Rahmenstruktur des Senders ermöglichen, und zum anderen eine Kanalschätzung ermöglichen, die unter anderem für die Entzerrung eingesetzt werden kann (siehe z.B. K. Manolakis, U. Krüger, K. Krüger, M.A.G. Estévez, S. Mikulla, V. Jungnickel, "Borehole Communication with Acoustic OFMD", International OFDM-Workshop 2011, Germany (2011)).

Im Zusammenhang mit dem oben genannten Ausführungsbeispiel betreffend die Tiefenbohrungen wurde jedoch festgestellt, dass die Übertragung unter Verwendung nur einer LTE-Einheit, die auf die oben beschriebenen Art und Weise modifiziert wurde, nicht ausreichend ist, da die für die Übertragung verwendeten Signale, insbesondere für längere Bohrstränge, ungeeignet sind aufgrund der Pulsverbreiterung (delay spread), die bis zu 0,5 Sekunden betragen kann, und ferner werden die Passbänder im Kanal, der durch den längeren Bohrstrang definiert ist, immer schmaler, so dass eine genaue Anpassung der genutzten Frequenzbänder erforderlich ist.

Um diese Problematik zu lösen, nämlich die zu große Pulsverbreiterung und die zu schmalen Passbänder, wird erfindungsgemäß auf die Erweiterung des LTE-Mobilfunkstandards, die als LTE-Advanced bezeichnet wird, zurückgegriffen, die sogenannte Carrier-Aggregation. Wie oben erwähnt, werden hierbei gemäß herkömmlichen LTE-Verbindungen mehrere dieser Verbindungen parallel als eine Übertragungsstrecke gebündelt, um so mit einer höheren Abtastrate eine Verbindung mit erhöhter Datenrate zu realisieren. Der erfindungsgemäße Ansatz macht hiervon Gebrauch, jedoch zu einem anderen Zweck. Erfindungsgemäß wird die Abtastrate konstant gehalten, wodurch ermöglicht wird, in der zur Verfügung stehenden Bandbreite von beispielsweise 9 kHz mehrere LTE-Systeme, die auf die oben beschriebene Art und Weise angepasst wurden, zu betreiben, wodurch ein entsprechend verlängertes OFDM-Schutzintervall (cyclic prefix) sowie eine bessere spektrale Auflösung bei der Frequenzzuweisung möglich ist.

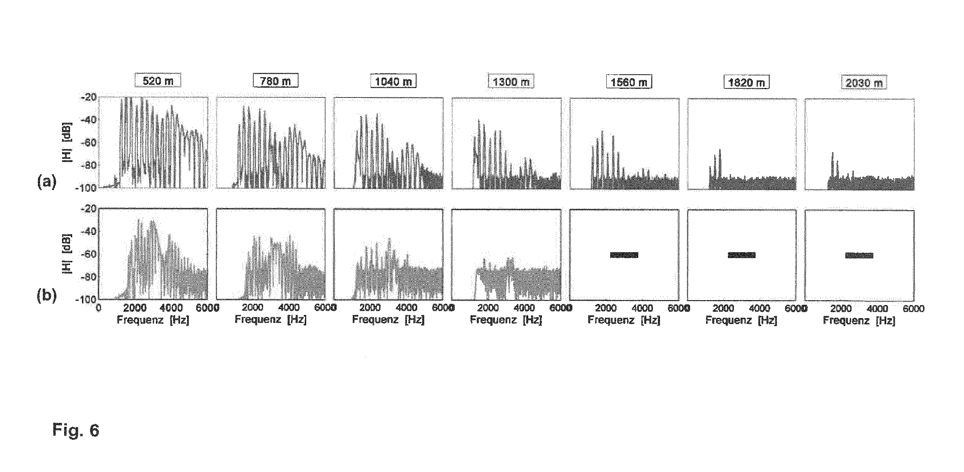

Nachfolgend werden anhand von Simulationsergebnissen die Vorteile des erfindungsgemäßen Ansatzes erläutert, wobei die Simulationen auf Kanaldaten basieren, die im Rahmen eines Feldtestes an der kontinentalen Tiefenbohrung in Windisch-Eschenbach erhalten wurden. Ein Bohrgestänge wurde bei verschiedenen Tiefen (Längen) vermessen, und zur Bestimmung der Kanaleigenschaften wurde die Impulsantwort des jeweiligen Kanals gewonnen. Ein Chip-Signal (Sinus-Sweep mit linear ansteigender Frequenz) wurde eingesetzt, da dieses Signal nahezu perfekte Autokorrelationseigenschaften besitzt und damit die Kreuzkorrelation des gesendeten Chip-Signals mit dem empfangenen Signal im Wesentlichen die Impulsantwort des Kanals ergibt (Korrelationsempfänger). Übertragungseigenschaften des Bohrgestänges können aus dem Vergleich der gesendeten und empfangenen Sinus-Sweep-Signale ermittelt werden. Durch geeignete Wahl der Fenster lassen sich nochmals 10 bis 20 dB Abstand zum Rauschen gewinnen. Dies ist vorteilhaft, denn je größer der Abstand zwischen dem Nutzsignal und dem Rauschsignal ist, desto sicherer können die Nutzsignale erkannt werden. Eine zusätzliche FFT liefert den Frequenzgang des Kanals und Fig. 6 zeigt den Frequenzgang für verschiedene Wellentypen und für verschiedene Tiefen. Genauer gesagt zeigt Fig. 6(a) den Frequenzgang des Kanals für eine longitudinale akustische Welle für unterschiedliche Längen des Bohrstrangs, und Fig. 6(b) zeigt den Frequenzgang des Kanals für eine transversale akustische Welle für verschiedene Längen des Bohrstrangs. Basierend auf den gewonnenen, realistischen Kanaldaten wurden verschiedene LTE-Systeme für eine Datenübertragung simuliert, wobei ein Abstand zwischen dem Nutzsignal und dem Rauschsignal (SNR) von 20 dB angenommen wurde. Dieser Abstand wurde bei der Messung und longitudinalen Anregung bis zu einer Tiefe von 1.300 m erreicht. Eine Datenübertragung ist möglich, solange die Signale aus dem Rauschen des Empfängers herausragen. Dann können diese mit einer QPSK mit höchster Fehlercodierung beladen werden. Bei beliebig großer Signalamplitude wird die absolut höchste Datenrate erreicht, dann ist für alle Frequenzen eine 64 QAM möglich und es ergibt sich eine Bandbreite von ca. 34 kBit/s als oberstes Limit.

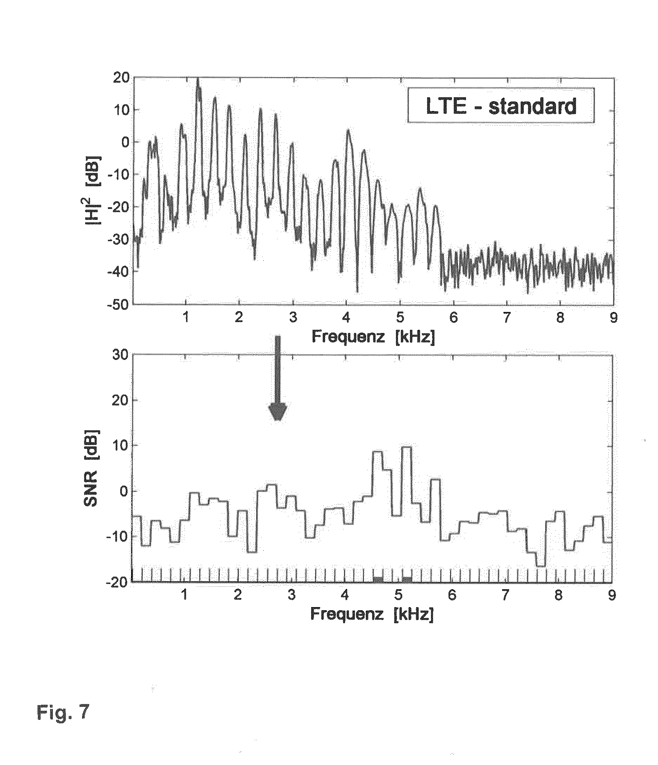

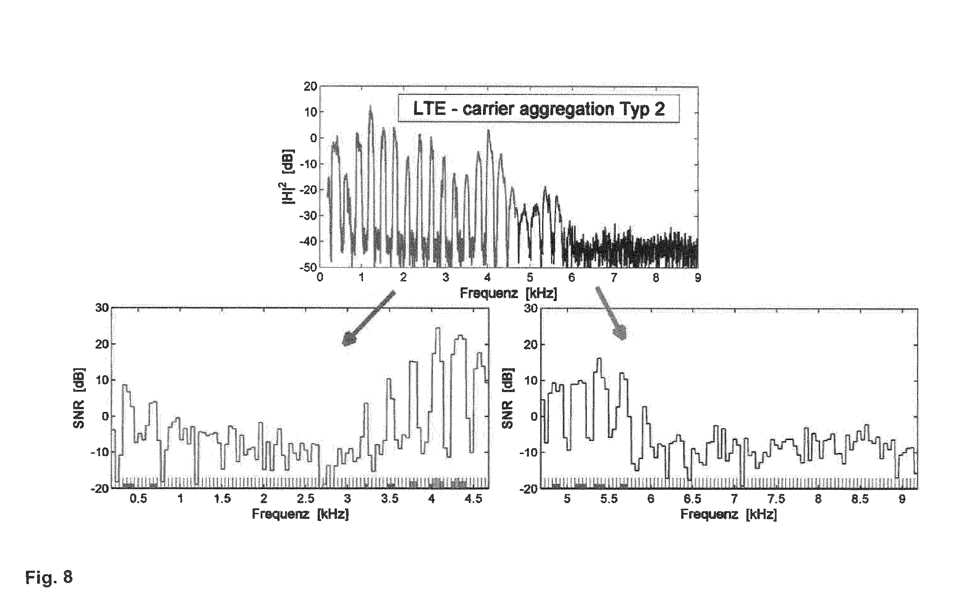

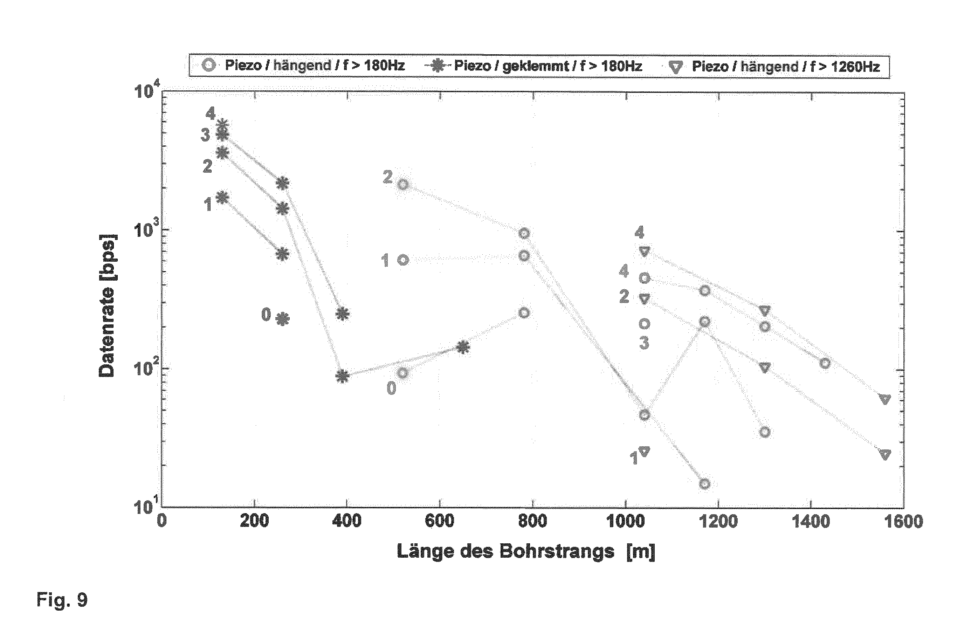

Gemäß Ausführungsbeispielen umfasst eine Datenübertragung mehrere Schritte. Zunächst wird ein sogenanntes Sounding-Signal übertragen, mit dessen Hilfe die Verteilung des SNR über die Frequenzbereiche abgeschätzt werden kann. Diese Information wird dann zurück übertragen und ergibt eine Vorschrift zum Beladen der Passbänder mit Daten, wie dies anhand der Figuren 7 und 8 gezeigt ist. Fig. 7 zeigt ein Beispiel für die spektrale Verteilung der SNR-Schätzung für den Standard-LTE (94 Bit/s). Fig. 8 zeigt die spektrale Verteilung der SNR-Schätzung für LTE mit Carrier-Aggregation 2 (2.143 Bits/s), wobei die oberen Darstellungen die Kanäle zeigen, die grundsätzlich gleich sind, jedoch auf der Grundlage unterschiedlicher Sounding-Prozeduren erfasst wurden und daher geringe Abweichungen voneinander aufweisen. Fig. 9 zeigt simulierte Datenraten mit den jeweils gemessenen Kanalcharakteristika in Abhängigkeit von der Gesamtlänge des Bohrstrangs, wobei lediglich longitudinale Wellen betrachtet wurden, und die Ziffern 0 bis 4 kennzeichnen das verwendete LTE-System, wobei gilt: 0 = Standard LTE, 1 bis 4 = LTE mit Carrier-Aggregation-Typ 1 bis 4. Die zwischen 400 und 600 m liegenden Punkte zeigen die Beispiele aus den Figuren 7 und 8, wobei ferner gilt, für eine Frequenzgröße von f> 180 Hz werden nur die Ressourcenblöcke oberhalb von 180 Hz besetzt, und für f> 1.260 Hz werden nur die Ressourcenblöcke oberhalb von 1.260 Hz besetzt.

Wie der Fig. 9 zu entnehmen ist, ergibt sich eine maximale Datenrate von 5.700 Bit/s bei einer Länge von 130 m. Bei einer Länge des Bohrgestänges von 1,5 km waren immer noch nahezu 100 Bit/s übertragbar. Bei einer Länge von 1 km betrug die Datenrate etwa 700 Bit/s. Somit entsprechen die gemäß dem erfindungsgemäßen Ansatz erreichbaren Datenraten in etwa dem 10-fachen der gängigen Mud-Puls-Telemetrien.

Gemäß weiteren Ausführungsbeispielen kann eine Linearisierung der Aktoren durchgeführt werden, um höhere Sendeleistungen bereitzustellen sowie einen reduzierten Anteil störender Oberwellen und Mischfrequenzen. Auch MIMO-Techniken unter Verwendung mehrerer Aktoren und Empfänger tragen zu einer weiteren Verbesserung der Datenrate bei. Auf Empfängerseite kann der SNR durch signalangepasste Verstärkung vor der A/D-Wandlung erhöht werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Datenübertragung mit einer Übertragungsbandbreite (BW_{K}), mit folgenden Schritten:
Bereitstellen einer Mehrzahl von Sendern (112), die gemäß einem Kommunikationsstandard für eine Datenübertragung mit einer Bandbreite arbeiten, die höher ist als die Übertragungsbandbreite (BW_{K});
Anpassen der Sender (112) an die Übertragungsbandbreite (BW_{K}); und
Zuordnen einer beliebigen Anzahl der angepassten Sender (112) zu unterschiedlichen Trägerfrequenzen in der Übertragungsbandbreite (BW_{K}) für eine parallele Datenübertragung.

2. Verfahren nach Anspruch 1, bei dem das Anpassen der Sender (112) ein Reduzieren der Bandbreite der Sender (112) auf die Übertragungsbandbreite (BW_{K}) oder auf einen Teilbereich der Übertragungsbandbreite (BW_{K}) umfasst.

3. Verfahren nach Anspruch 1 oder 2, bei dem das Anpassen des Senders (112) ein Reduzieren der Taktrate umfasst.

4. Verfahren nach einem der Ansprüche 1 bis 3, bei dem die Daten über einen Kanal (104) mit sich ändernder Kanaleigenschaft in der Übertragungsbandbreite (BW_{K}) übertragen werden, und wobei ein Sender (112) zugeordnet wird, falls die Kanaleigenschaft einer Trägerfrequenz eine zuverlässige Datenübertragung zulässt.

5. Verfahren nach Anspruch 4, mit folgenden Schritten:
Bestimmen der Kanaleigenschaft des Kanals (104) und Rückübertragen der Kanaleigenschaft über einen Rückkanal (106);
Auswählen der Bereiche, in denen die Kanaleigenschaft eine zuverlässige Datenübertragung zulässt; und
Zuordnen jeweils eines angepassten Senders (112) zu dem ausgewählten Bereich.

6. Verfahren nach einem der Ansprüche 1 bis 5, bei dem die Datenübertragung eine Mehrträger-, insbesondere eine OFDM-, Datenübertragung umfasst.

7. Verfahren nach einem der Ansprüche 1 bis 6, bei dem die Datenübertragung eine Datenübertragung über einen reellwertigen, z.B. akustischen, Kanal (104) umfasst.

8. Verfahren nach Anspruch 7, bei dem der akustische Kanal (104) ein Bohrgestänge (304) umfasst, an dessen Ende ein Bohrkopf und benachbart zu dem Bohrkopf (301) ein Sensor (306) angeordnet sind, wobei die Datenübertragung eine Datenübertragung von Sensordaten nach Übertage umfasst.

9. Verfahren nach einem der Ansprüche 1 bis 6, bei dem die Datenübertragung eine Datenübertragung über ein Funksystem (212) bei einer Frequenz umfasst, die niedriger ist als eine Betriebsfrequenz des nicht angepassten Senders (112).

10. Verfahren nach Anspruch 9, bei dem das Funksystem (212) einen oder mehrere Sensoren (202) und/oder Aktoren mit einer zentralen Erfassungsstelle (200) verbindet.

11. Computer-Programm-Produkt mit Anweisungen, die auf einem computerlesbaren Medium gespeichert sind, zum Ausführen des Verfahrens nach einem der Ansprüche 1 bis 10, wenn die Anweisungen durch einen Computer ausgeführt werden.

12. Vorrichtung zur Datenübertragung mit einer Übertragungsbandbreite (BW_{K}), mit:
einer Mehrzahl von Sendern (112), die gemäß einem Kommunikationsstandard für eine Datenübertragung mit einer Bandbreite arbeiten, die höher ist als die Übertragungsbandbreite (BW_{K}), und die an die Übertragungsbandbreite (BW_{K}) angepasst sind, und
einer Steuerung (110), die wirksam ist, um der Übertragungsbandbreite (BW_{K}) eine Mehrzahl der angepassten Sender (112) bei unterschiedlichen Trägerfrequenzen in der Übertragungsbandbreite (BW_{K}) für eine parallele Datenübertragung zuzuordnen.

13. System zur Datenübertragung, mit
einem Übertragungskanal (104);
einer Vorrichtung (100) nach Anspruch 12 für eine Datenübertragung auf dem Übertragungskanal (104); und
einem Empfänger (102) zum Empfangen der über den Übertragungskanal (104) übertragenen Daten.

14. System nach Anspruch 13, bei dem der Übertragungskanal (104) einen akustischen Kanal, einen Funkkanal oder einen anderen Mehrwege-Kommunikationskanal umfasst.

15. System nach Anspruch 14, bei dem der akustische Kanal (104) ein Bohrgestänge (304) umfasst, wobei ein Bohrkopf (301), ein dem Bohrkopf zugeordneter Sensor (306) und die Vorrichtung (100) zur Datenübertragung an einem ersten Ende des Bohrgestänges (304) angepasst sind, und wobei der Empfänger (308) Übertage angeordnet ist.
